# FASCICULE DE BREVET EUROPEEN

(11) **EP 1 993 419 B1**
(45) Date de publication et mention de la délivrance du brevet: **27.05.2009**
(21) Numéro de dépôt: 06841844.1
(22) Date de dépôt: 01.12.2006
(51) Int. Cl.: A47J 47/16

(54) **DISPOSITIF DE FIXATION POUR BARRE D'ACCROCHAGE D'USTENSILES DE CUISINE**
BEFESTIGUNGSSYSTEM FÜR EIN HÄNGEBRETT FÜR KÜCHENUTENSILIEN
FIXING SYSTEM FOR HANGING BAR FOR KITCHEN UTENSILS

(30) Priorité: 19.01.2006 FR 0600496
(43) Date de publication de la demande: 26.11.2008
(73) Titulaire: Cristel SAS, 25490 Fesches-le-Chatel (FR)
(72) Inventeur: DODANE, Paul, F-25490 Fesches-le-Chatel (FR)
(74) Mandataire: Poupon, Michel
(86) Numéro de dépôt international: PCT/FR2006/002634
(87) Numéro de publication internationale: WO 2007/083005

(56) Documents cités:
- DE-U1- 29 603 305
- DE-U1- 29 902 037

## Description

L'invention concerne un nouveau dispositif de fixation pour barre d'accrochage d'ustensiles de cuisine.

Dans le domaine de l'équipement des plans de travail des meubles de cuisine, l'art antérieur connaît des présentoirs mettant tous les ustensiles à portée de main. Ecumoire, louche, boite à sel, dérouleur de film, etc.... sont accrochés à une barre qui comprend des trous pour la fixation aux murs. Un présentoir de ce type est décrit dans le document DE 37 10 485.

Dans la plupart des cuisines, les murs sont recouverts de carreaux de faïence et il est souvent nécessaire de percer au milieu d'un carreau, c'est une opération délicate avec risque de casse des carreaux. Ce problème vient du fait que les trous prévus dans les barres imposent les emplacements des perçages à effectuer dans le mur.

Un autre document, FR 529 215, décrit un système à barre ne comportant pas de trous de fixation et qui est facilement démontable, car la barre est engagée à ses extrémités dans des fentes de deux équerres de fixation. Cette barre ne comporte pas de trous, mais des butées latérales préformées ce qui impose également les emplacements des perçages à effectuer dans un mur ou un autre support vertical.

Le document DE-U-29 603 305 décrit un dispositif de fixation selon le préambule de la revendication indépendante 1.

L'invention vise à proposer un dispositif de fixation permettant de choisir les emplacements des perçages, par exemple dans les joints des carrelages, ou au point de rencontre de deux barres, puis d'y fixer les moyens de fixation, et d'y adapter une barre de fixation sans trou, ni butée latérale et qui peut éventuellement être recoupée.

En outre l'invention vise à proposer un dispositif de fixation utilisable soit en fixation murale, soit en fixation sous placard.

Ces objectifs sont atteints par l'invention qui consiste en un dispositif de fixation pour une barre d'accrochage d'ustensiles de cuisine, tel que par exemple, des louches, écumoires, dérouleurs de film, etc...., **caractérisé en ce qu**'il comporte principalement un support-équerre et un cavalier:
- le support-équerre se présentant sous forme d'un plateau plan, prolongé sur un de ses bords par un pli à 90°, ledit plateau présentant sur la face opposée au pli un moyen de coopération et un perçage central,
- le cavalier présentant une section en U avec une face avant réunie par un pontet à une face arrière présentant une découpe débouchante vers le bas de ladite face arrière, et dans laquelle le moyen de coopération peut s'engager et coulisser.

On comprendra mieux l'invention à l'aide de la description ci-après faite en référence aux figures annexées suivantes :
- figures 1 et 2 : vues d'ensemble d'un dispositif de fixation selon une première variante de réalisation de l'invention, respectivement côté avant et côté arrière,
- figure 3 : vue en éclaté du dispositif de la figure 1,
- figure 4 : vue en coupe transversale du dispositif de la figure 1, en position d'utilisation,
- figures 5 et 6, vues d'ensemble d'un dispositif de fixation selon une deuxième variante de réalisation de l'invention, respectivement côté avant et côté arrière,
- figure 7, vue en coupe transversale du dispositif des figures 5 et 6.

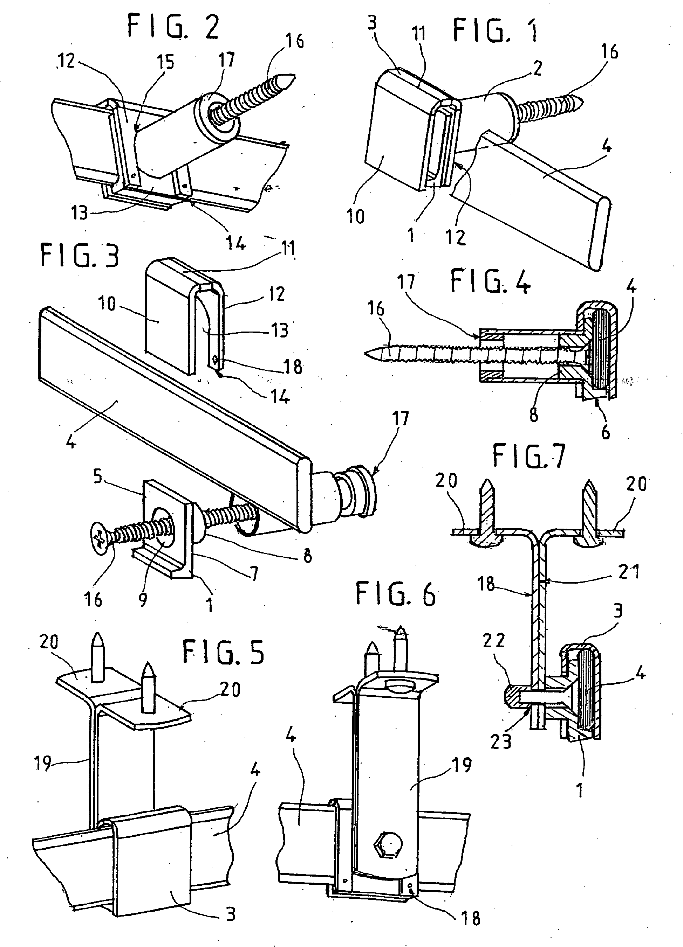

On se rapporte d'abord aux figures 1 à 4.

Cette première variante de l'invention se compose essentiellement d'un support-équerre (1), d'une entretoise (2), et d'un cavalier (3) et elle est destinée à être utilisée en "fixation murale".

Le support-équerre (1) est une pièce destinée à supporter une barre plate (4) à section rectangulaire, et il se présente sous la forme d'un plateau rectangulaire (5) plan prolongé sur un de ses bords par un pli (6) à 90°. En position d'utilisation, le plateau rectangulaire est disposé verticalement avec le pli en partie basse et dirigé vers l'avant du plateau, de telle sorte que la barre plate (4) repose par gravité sur le pli (6).

L'entretoise (2) est un simple élément tubulaire cylindrique dont la longueur détermine l'écartement de la barre par rapport à un mur ou autre support vertical telle qu'une façade de meuble par exemple.

On prévoit un moyen de coopération (7) entre le plateau (5) et l'entretoise (2), par exemple une saillie tubulaire (8) cylindrique apte à s'engager à l'intérieur de l'entretoise et prévue autour d'un perçage (9) circulaire central du plateau (5) et en saillie vers l'arrière du plateau.

Le cavalier (3) présente une section en U et comporte une face avant (10) plane sensiblement rectangulaire, pleine, et réunie par un pontet (11) à une face arrière (12) également plane, présentant une découpe (13) ouverte, débouchant sur la bordure inférieure (14) de ladite face arrière. Ladite découpe (13) présente une largeur au moins égale à la dimension extérieure ou au diamètre extérieur du moyen de coopération (7), et/ou de l'entretoise (2) et se termine en demi-cercle dans sa partie haute (15).

En outre, la distance intérieure entre les deux faces et au moins égale à l'épaisseur de la barre additionnée de l'épaisseur du plateau (5).

En position d'utilisation de cette première variante de fixation, l'entretoise est engagée sur la saillie arrière du support-équerre, qui est fixé sur un plan vertical à l'aide d'une vis (16) disposée horizontalement. Préférentiellement, on prévoit que la tête de la vis s'engage dans le perçage (9) pour que la barre puisse s'appliquer contre le plateau (5).

Des variantes de coopération entre l'entretoise et le moyen de coopération (7) peuvent être envisagées, par exemple avec une entretoise s'engageant dans la saillie, ou avec un moyen (7) en forme de crochets de clipsage ou autre.

En outre, on peut prévoir également une rondelle ou capuchon (17) de finition ou de propreté s'engageant dans l'ouverture arrière de l'entretoise, et augmentant la surface d'appui sur le mur.

Après avoir fixé deux supports-équerre, on met en place une barre sur ceux-ci, puis on engage, sur chaque support, un cavalier en présentant l'ouverture de la découpe à l'arrière du support-équerre, et au-dessus de la saillie (8). Puis par un déplacement en translation vers le bas, on met en place chaque cavalier qui vient coiffer la barre et le support-équerre, et plaquer ladite barre contre le plateau du support-équerre.

On prévoit avantageusement des picots (18) à l'intérieur et en partie basse de l'une des faces du cavalier pour permettre son maintien par clipsage, le démontage pouvant s'effectuer en libérant les cavaliers manuellement ou à l'aide d'un outil.

On se rapporte à présent aux figures 5 à 7. Cette deuxième variante de réalisation est destinée à être utilisée en "fixation sous placard".

Elle comporte, en commun avec la première variante, le support-équerre (1) avec son moyen de coopération (7) et le cavalier (3), qui coopèrent avec une patte de fixation (19).

La patte de fixation (19) peut présenter des variantes d'exécution. Celle qui est présentée sur les figures vient se fixer sous un meuble de cuisine suspendu, par deux vis engagées chacune dans un des deux retours (20) à 90° prévus de part et d'autre de l'âme centrale (21) de la patte (19).

Après avoir fixé deux de ces pattes (19) sous un meuble, on fixe directement par boulonnage un support-équerre (1) à chaque extrémité basse des pattes (19), au moyen d'un système vis-écrou (22) s'engageant dans un perçage (23) de la patte (19).

Pour chacune des variantes de réalisation, on fait observer les particularités dimensionnelles du cavalier et du support-équerre, notamment sur les vues en coupe des figures 4 et 7 :
- le pontet (11) vient en appui sur la barre (4) et non sur le support-équerre de manière à appliquer celle-ci verticalement sur le pli (6) du support-équerre,
- les faces avant et arrière couvrent de préférence, mais non obligatoirement entièrement la barre et le support-équerre, notamment pour un effet esthétique et de protection (vapeurs grasses, poussières...),
- la face avant du cavalier vient en appui sur la barre (4) et non sur le pli (6), de manière à appliquer celle-ci contre le plateau (5) du support-équerre,
- la barre est bloquée par le cavalier et ne peut glisser latéralement.

Les avantages de l'invention sont non limitativement les suivants :
- fixation pratique dont l'aspect esthétique à angles droits est très contemporain, bien entendu d'autres aspects extérieurs des pontets pouvant être envisagés,
- les barres sont livrées sans trous ce qui permet de choisir l'emplacement de fixation le mieux approprié ; dans un joint entre deux carreaux par exemple ou au point de rencontre de deux barres pour masquer la jonction et donner l'impression d'une même barre unique sans discontinuité y compris dans les retours d'angle,
- les barres peuvent facilement être recoupées à la demande,
- démontage facile, pour l'entretien par exemple,
- le moyen de coopération (7) présente deux fonctions, il permet l'engagement de l'entretoise dans la première variante de l'invention, et il réalise, dans la deuxième variante, un écartement entre le support-équerre et la patte de fixation pour permettre la mise en place du cavalier. Ce moyen (7) peut présenter éventuellement d'autres formes que celle présentée sur les figures,
- le principe de l'invention n'est pas limité à la fixation de barres plates, en adaptant les dimensions du support-équerre et du cavalier, on peut envisager de bloquer des barres de section circulaire, elliptique ou autre.

## Revendications

1. Dispositif de fixation pour une barre (4) d'accrochage d'ustensiles de cuisine, tel que par exemple, des touches, écumoires, dérouleurs de film, comportant un support-équerre (1) et un cavalier (3) :
- le support-équerre se présentant sous forme d'un plateau (5) plan, prolongé sur un de ses bords par un pli (6) à 90°, ledit plateau présentant sur la face opposée a pli (6) un moyen de coopération (7) et un perçage central (9),
- le cavalier (3) **caractérisé en ce que** présente une section en U avec une face avant (10) réunie par un pontet (11) à une face arrière (12) présentant une découpe (13) débouchante vers le bas de ladite face arrière, et dans laquelle le moyen de coopération (7) peut s'engager et coulisser.

2. Dispositif selon la revendication 1, **caractérisé en ce que** le moyen de coopération (7) est une saillie tubulaire (8) cylindrique prévue autour du perçage (9).

3. Dispositif selon l'une des revendications 1 à 2, **caractérisé en ce qu'**il comporte en outre une entretoise (2) tubulaire apte à s'engager avec le moyen de coopération (7),

4. Dispositif selon l'une des revendications 1 à 2, **caractérisé en ce qu'**il comporte en outre une patte (19) comportant à son extrémité basse un perçage (23) pour coopérer avec le moyen de coopération (7) d'un support-équerre (1), et comportant en partie haute deux retours (20) de fixation.

5. Dispositif selon l'une des revendications 1 à 4, **caractérisé en que** la découpe débouchante (13) de la face arrière du cavalier présente une largeur au moins égale au diamètre extérieur du moyen de coopération (7) et se termine en demi-cercle dans sa partie haute (15).

6. Dispositif selon l'une des revendications 1 à 5, **caractérisé en ce que** la distance intérieure entre les deux faces du cavalier (3) est au moins égale à l'épaisseur de la barre additionnée de l'épaisseur du plateau (5).

7. Dispositif selon l'une des revendications 1 à 6, **caractérisé en ce que** le cavalier présente, à l'intérieur et en partie basse de l'une de ses faces, des picots (18) de clipsage.

8. Dispositif selon l'une des revendications 1 à 7, **caractérisé en ce qu'**en position d'utilisation, le pontet (11) vient en appui sur la barre (4) et la face avant du cavalier vient en appui sur la barre 4 pour bloquer la barre.

## Claims

1. Fixing device for a hook bar (4) for cooking utensils such as for example ladies, skimmers, clingfilm dispensers, comprising a support bracket (1) and a staple (3):
the support bracket taking the form of a flat plate (5) extended on one edge by a 90° fold (6), said plate having, on the face opposite the fold (6), a cooperation means (7) and a central hole (9),
**characterised in that** the staple (3) has a U-section with a front face (10) joined by a yoke (11) to a rear face (12) with a cut-out (13) opening towards the base of said rear face, and in which the cooperation means (7) can engage and slide.

2. Device according to Claim 1, **characterised in that** the cooperation means (7) is a cylindrical tubular protrusion (8) provided around the hole (9).

3. Device according to either of Claims 1 and 2, **characterised in that** it comprises also a tubular spacer (2) able to engage with the cooperation means (7).

4. Device according to either of Claims 1 and 2, **characterised in that** it also comprises a mount (19) comprising at its bottom end a hole (23) for cooperating with the cooperation means (7) of a support bracket (1), and comprising at its top end two fixing returns (20).

5. Device according to any one of Claims 1 to 4, **characterised in that** the opening cut-out (13) of the rear face of the staple has a width at least equal to the outer diameter of the cooperation means (7) and terminates in a semi-circle in its upper part (15).

6. Device according to any one of Claims 1 to 5, **characterised in that** the inner distance between the two faces of the staple (3) is at least equal to the thickness of the bar plus the thickness of the plate (5).

7. Device according to any one of Claims 1 to 6, **characterised in that** the staple has, inside and at the bottom part of one of its faces, clip pins (18).

8. Device according to any one of Claims 1 to 7, **characterised in that** in the usage position, the yoke (11) rests on the bar (4) and the front face of the staple rests on the bar (4) to block the bar.

## Patentansprüche

1. Befestigungsvorrichtung für eine Aufhängstange (4) von Küchenutensilien, wie zum Beispiel Schöpflöffel, Schaumlöffel, Folienabwickler, die einen Tragwinkel (1) und einen Aufsatz (3) aufweist:
- wobei der Tragwinkel die Form einer flachen Platte (5) hat, die auf einem ihrer Ränder von einer Falte (6) zu 90° verlängert wird, wobei die Platte auf der Seite, die der Falte (6) entgegen gesetzt ist, ein Zusammenwirkmittel (7) und eine zentrale Bohrung (9) aufweist, **dadurch gekennzeichnet, dass**
- der Aufsatz (3) einen U-förmigen Querschnitt mit einer Vorderseite (10) aufweist, die durch eine Brücke (11) mit einer Rückseite (12) vereint ist, die einen Ausschnitt (13) aufweist, der nach unterhalb der Rückseite durchgeht, und in den sich das Zusammenwirkmittel (7) einfügen und darin gleiten kann. '

2. Vorrichtung nach Anspruch 1, **dadurch gekennzeichnet, dass** das Zusammenwirkmittel (7) ein zylindrischer röhrenförmiger Vorsprung (8) ist, der um die Bohrung (9) vorgesehen ist.

3. Vorrichtung nach einem der Ansprüche 1 bis 2, **dadurch gekennzeichnet, dass** sie ferner einen röhrenförmigen Abstandshalter (2) aufweist, der sich in das Zusammenwirkmittel (7) einfügen kann.

4. Vorrichtung nach einem der Ansprüche 1 bis 2, **dadurch gekennzeichnet, dass** sie ferner eine Pratze (19) aufweist, die an ihrem unteren Ende eine Bohrung (23) aufweist, um mit dem Zusammenwirkmittel (7) eines Tragwinkels (1) zusammenzuwirken, und im oberen Teil zwei Befestigungsrückläufe (20) aufweist.

5. Vorrichtung nach einem der Ansprüche 1 bis 4, **dadurch gekennzeichnet, dass** der durchgehende Ausschnitt (13) der Rückseite des Aufsatzes eine Breite aufweist, die zumindest gleich dem Außendurchmesser des Zusammenwirkmittels (7) ist und in einem Halbkreis in seinem oberen Teil (15) endet.

6. Vorrichtung nach einem der Ansprüche 1 bis 5, **dadurch gekennzeichnet, dass** die innere Entfernung zwischen den zwei Seiten des Aufsatzes (3) zumindest gleich der Stärke der Stange zuzüglich der Stärke der Platte (5) ist.

7. Vorrichtung nach einem der Ansprüche 1 bis 6, **dadurch gekennzeichnet, dass** der Aufsatz im inneren und unteren Teil einer seiner Seiten Clipsstachel (18) aufweist.

8. Vorrichtung nach einem der Ansprüche 1 bis 7, **dadurch gekennzeichnet, dass** die Brücke (11) beim Gebrauch auf der Stange (4) zum Aufliegen kommt, und dass die Vorderseite des Aufsatzes auf der Stange (4) zum Aufliegen kommt, um die Stange zu blockieren.
